# EUROPEAN PATENT APPLICATION

(11) **EP 4 459 897 A1**
(43) Date of publication of application: **06.11.2024**
(21) Application number: 22915643.5
(22) Date of filing: 05.12.2022
(51) Int. Cl.: H04B 10/116, H04B 10/80

(54) **UNDERWATER COMMUNICATION DEVICE, UNDERWATER COMMUNICATION METHOD, AND PROGRAM**

(30) Priority: 28.12.2021 JP 2021214099
(71) Applicant: Kyocera Corporation, Kyoto-shi, Kyoto 612-8501 (JP)
(72) Inventor: NAKAO, Masaki, Kyoto-shi, Kyoto 612-8501 (JP)
(74) Representative: Viering, Jentschura & Partner mbB Patent- und Rechtsanwälte
(86) International application number: PCT/JP2022/044715
(87) International publication number: WO 2023/127412

(57) **Abstract**

An underwater communication apparatus 100 that performs underwater visible light communication includes: a plurality of light emitting regions 10 configured to emit visible light in respective different directions and including respective light emitters 101; a plurality of light receivers 102 configured to detect visible light incident on each of the plurality of light emitting regions 10; and a controller 110 configured to control the respective light emitters 101 to selectively cause part of the plurality of light emitting regions 10 to emit light, depending on a status of detection of incident visible light at the plurality of light receivers 102.

## Description

### TECHNICAL FIELD

The present disclosure relates to an underwater communication apparatus, an underwater communication method, and a program.

### BACKGROUND OF INVENTION

In general, underwater communication uses sound waves and visible light. Communication that uses visible light generally adopts a policy of performing communication by causing a reception side and a transmission side of a visible light communication signal to face each other using a laser or a Light Emitting Diode (LED).

### CITATION LIST

### PATENT LITERATURE

Patent Document 1: Japanese application publication No. 2017-228889

### SUMMARY

An underwater communication apparatus according to a first aspect is an apparatus for performing underwater optical communication. The underwater communication apparatus includes a plurality of light emitting regions configured to emit light in respective different directions and including respective light emitters; a plurality of light receivers configured to detect light incident on each of the plurality of light emitting regions; and a controller configured to control the respective light emitters to selectively cause part of the plurality of light emitting regions to emit light, depending on a status of the detection of incident light at the plurality of light receivers.

An underwater communication method according to a second aspect is a method used in an underwater communication apparatus for performing underwater optical communication. The underwater communication method includes: detecting, at a plurality of light receivers, light incident on each of a plurality of light emitting regions configured to emit light in respective different directions and including respective light emitters; and controlling the light emitter to selectively cause part of the plurality of light emitting regions to emit light depending on a status of the detection of incident light at the plurality of light receivers.

A program according to a third aspect causes an underwater communication apparatus for performing underwater optical communication to execute: processing of detecting, at a plurality of light receivers, light incident on each of a plurality of light emitting regions configured to emit visible light in respective different directions and including respective light emitters; and processing of controlling the respective light emitters to selectively cause part of the light emitting regions of the plurality of light emitting regions to emit light, depending on a status of the detection of incident light at the plurality of light receivers.

### BRIEF DESCRIPTION OF THE DRAWINGS

FIG. 1 is a diagram illustrating a configuration of an underwater communication apparatus according to a first embodiment.
FIG. 2 is a diagram illustrating a configuration example of a plurality of light emitters according to the first embodiment.
FIG. 3 is a diagram illustrating an operation example of the underwater communication apparatus according to the first embodiment.
FIG. 4 is a diagram illustrating an operation flow example of the underwater communication apparatus according to the first embodiment.
FIG. 5 is a diagram illustrating an operation example of the underwater communication apparatus according to a first variation of the first embodiment.
FIG. 6 is a diagram illustrating an operation example of the underwater communication apparatus according to a second variation of the first embodiment.
FIG. 7 is a diagram illustrating a configuration of the underwater communication apparatus according to a second embodiment.
FIG. 8 is a diagram illustrating pattern examples of light emitting regions caused to emit light.
FIG. 9 is a diagram illustrating a first operation example of the underwater communication apparatus according to the second embodiment.
FIG. 10 is a diagram illustrating a second operation example of the underwater communication apparatus according to the second embodiment.
FIG. 11 is a diagram illustrating a communication operation example of the underwater communication apparatus according to a third embodiment.
FIG. 12 is a diagram illustrating a configuration example of a plurality of light emitters of the underwater communication apparatus according to the third embodiment.
FIG. 13 is a diagram illustrating a configuration of the underwater communication apparatus according to a fourth embodiment.
FIG. 14 is a diagram illustrating an application scenario example of the underwater communication apparatus according to the fourth embodiment.
FIG. 15 is a diagram illustrating an application scenario example of the underwater communication apparatus according to the fourth embodiment.
FIG. 16 is a diagram illustrating an application scenario example of the underwater communication apparatus according to the fourth embodiment.
FIG. 17 is a diagram illustrating a configuration of the underwater communication apparatus according to a fifth embodiment.
FIG. 18 is a diagram illustrating an application scenario example of the underwater communication apparatus according to the fifth embodiment.

### DESCRIPTION OF EMBODIMENTS

In a communication system in which a reception side and a transmission side are positioned opposite to each other to perform communication, communication cannot be performed when the position of either the reception side or the transmission side is shifted. A system is considered applicable that provides a large number of light emitting elements at the transmission side to emit light in a wider range, but a problem exists in that current consumption and heat generation increase due to the emission of light at the large number of light emitting elements. As a result, the lifespan of the light emitting elements is also shortened. Another problem exists in that emitting light in a wide range may interfere with other communications.

An object of the present disclosure is to allow an increase in current consumption and heat generation to be suppressed while allowing communication even when the position of either the reception side or the transmission side is shifted.

An underwater communication apparatus according to embodiments will be described with reference to the drawings. The underwater communication apparatus according to the embodiments is an apparatus that performs underwater visible light communication. In the description of the drawings, the same or similar parts are denoted by the same or similar reference signs.

### First Embodiment

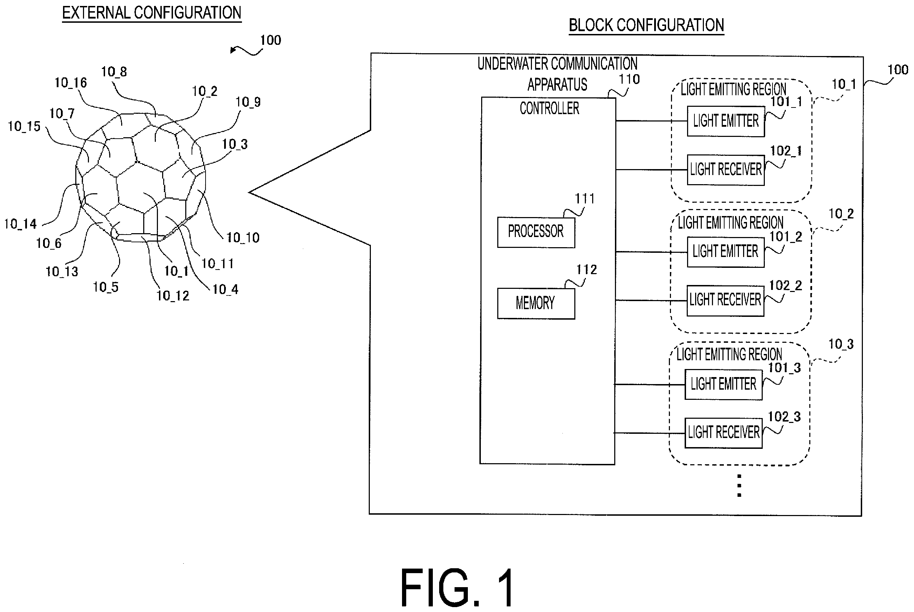

First, with reference to FIG. 1 to FIG. 4, the underwater communication apparatus according to the first embodiment will be described.

### (Configuration of Underwater Communication Apparatus)

FIG. 1 is a diagram illustrating a configuration of an underwater communication apparatus 100 according to the first embodiment.

The underwater communication apparatus 100 includes a plurality of light emitting regions 10 (10_1, 10_2, 10_3, and ...) that includes respective light emitters 101 (101_1, 101_2, 101_3, and ...) and emit visible light in respective different directions, a plurality of light receivers 102 (102_1, 102_2, 102_3, and ...) that detect the visible light incident on each of the plurality of light emitting regions 10, and a controller 110 that controls the light emitters 101 to selectively cause part of the plurality of light emitting regions 10 to emit light, depending on a status of the detection of incident visible light in the plurality of light receivers 102.

The underwater communication apparatus 100 is provided with the plurality of light emitting regions 10, each of which emits visible light in a different direction and includes the light emitter 101, thus allowing visible light (visible light communication signal) to be emitted in a wide range, more specifically, in various directions. The underwater communication apparatus 100 is provided with the plurality of light receivers 102 that detects visible light incident on each of the plurality of light emitting regions 10, thus allowing a light emitting region on which the visible light (visible light communication signal) is incident to be recognized. Thus, a direction in which a destination apparatus of communication exists can be estimated. The controller 110 controls the light emitters 101 to selectively cause part of the plurality of light emitting regions 10 to emit light, thus allowing only a minimum number of the light emitting regions 10 required for communication with the destination apparatus of communication to emit light. Thus, the underwater communication apparatus 100 can be provided that can suppress an increase in current consumption and heat generation while allowing underwater visible light communication even when the position of either the reception side or the transmission side of a visible light communication signal is shifted.

In the first embodiment, each of the plurality of light emitting regions 10 constitutes the surface of a polyhedron. FIG. 1 illustrates an example where such a polyhedron is a dotriacontahedron. That is, in the first embodiment, the polyhedron formed by the 32 light emitting regions 10 has a soccer ball shape including 12 pentagons and 20 hexagons. The polyhedron is not limited to the dotriacontahedron, and may be, for example, a k-hedron (k ? 4). Hereinafter, the underwater communication apparatus 100 employing this configuration will be also referred to as the "spherical underwater communication apparatus 100".

Each light emitting region 10 may constitute part of a housing of the underwater communication apparatus 100. That is, each light emitting region 10 is provided on the surface of the underwater communication apparatus 100. Alternatively, each light emitting region 10 may include a circuit board covered with a transparent housing (e.g., a transparent spherical housing). In that case, each light emitting region 10 is provided inside the housing. Each light emitting region 10 may be formed to smoothly adjoin to the adjacent light emitting regions 10. Each light emitting region 10 may have gaps from the adjacent light emitting regions 10. Alternatively, each light emitting region 10 may be formed to smoothly adjoin to the adjacent light emitting regions 10. The light emitting regions 10 do not need to be arranged uniformly, and the light emitting regions 10 may be densely arranged in a lower direction in a scenario where, for example, a larger number of destination apparatuses of communication are present in the lower direction.

Each light emitting region 10 includes the light emitter 101 and the light receiver 102. A single light emitter 101 includes at least one light emitting element that converts an electrical signal into an optical signal. Hereinafter, a configuration example where a single light emitter 101 includes a plurality of light emitting elements will be mainly described. The one light receiver 102 includes at least one light receiving element that converts an optical signal into an electrical signal. A partition may be provided between the light emitter 101 and the light receiver 102 such that the visible light emitted by the light emitter 101 is not incident on the light receiver 102. Alternatively, a period (i.e., transmission period) during which the light emitter 101 is caused to emit light and a period (i.e., reception period) during which the light receiver 102 is caused to receive light may be set in a time division manner. Each light emitter 101 performs a light emitting operation under control of the controller 110. Each light receiver 102 performs a light receiving operation under control of the controller 110. An electrical signal (i.e., received signal) obtained by the light receiving operation of the light receiver 102 is output to the controller 110.

The controller 110 controls each light emitter 101 and each light receiver 102. The controller 110 performs various types of processing in the underwater communication apparatus 100. The controller 110 includes at least one processor 111 and at least one memory 112. The memory 112 stores a program to be executed by the processor 111 and information to be used for processing by the processor. The processor 111 may include a digital signal processor and a Central Processing Unit (CPU). The digital signal processor performs modulation and demodulation, coding and decoding, and the like on digital signals. The CPU executes the program stored in the memory 112 to perform various types of processing.

Note that the underwater communication apparatus 100 may include a battery that stores electrical power to be supplied to each component of the underwater communication apparatus 100. Alternatively, the underwater communication apparatus 100 may be driven with electrical power supplied from an external source.

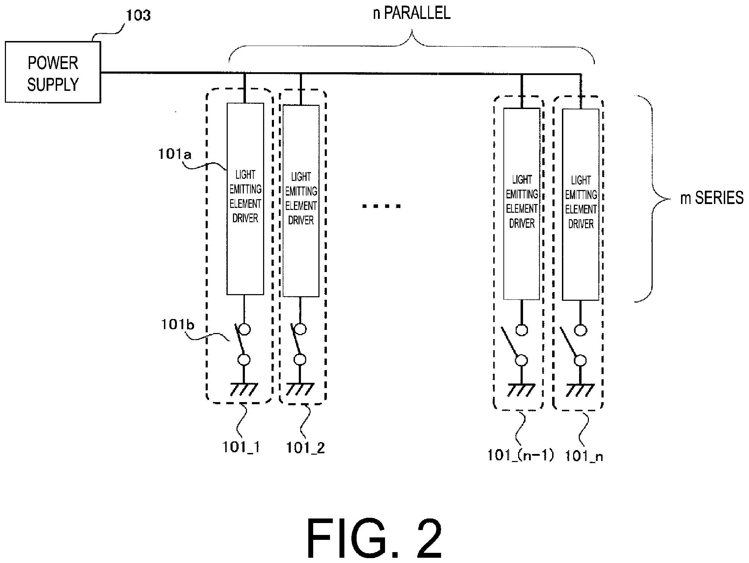

FIG. 2 is a diagram illustrating a configuration example of the plurality of light emitters 101 according to the first embodiment. Here, it is assumed that the total number of the light emitters 101 (light emitting regions 10) is n (n ≧ 2).

Each light emitter 101 includes a light emitting element driver 101a that is connected to a power supply 103 and drives m (m ≧ 1) light emitting elements, and a switch 101b that performs switching between on and off of the light emitting element driver 101a. Each light emitting element driver 101a may include the m (m ≧ 1) light emitting elements connected in series. The light emitting element may be a Light Emitting Diode (LED). The light emitting element may be a Laser Diode (LD). The n light emitting element drivers 101a are connected in parallel and one terminal of each light emitting element driver is connected to the power supply 103. As described above, when the number of the light emitting regions 10 is n (n ≧ 2), the plurality of light emitters 101 may include a circuit consisting of n light emitting regions connected in parallel and m light emitting elements connected in series.

Each light emitting element driver 101a and each switch 101b are controlled by the controller 110. More specifically, the controller 110 switches to an on state the switch 101b of the light emitter 101 included in the light emitting region 10 caused to emit light, and switches to an off state the switch 101b of the light emitter 101 included in the light emitting region 10 caused to not emit light. The controller 110 drives (performs switching between ON and OFF) each light emitting element driver 101a depending on a transmission signal. Controlling lighting on a per light emitting region 10 basis allows the circuit scale to be reduced because each light emitting element does not need to be individually controlled. Constant power supply to all of the light emitting elements does not need to be assumed, thus mitigating overestimated (unnecessary) design for a current capacity and heat generation. The controller 110 may apply a pulse corresponding to a transmission signal to the light emitting element driver 101a of the light emitter 101 the switch 101b of which has been caused to be in an on state.

### (Operation Example of Underwater Communication Apparatus)

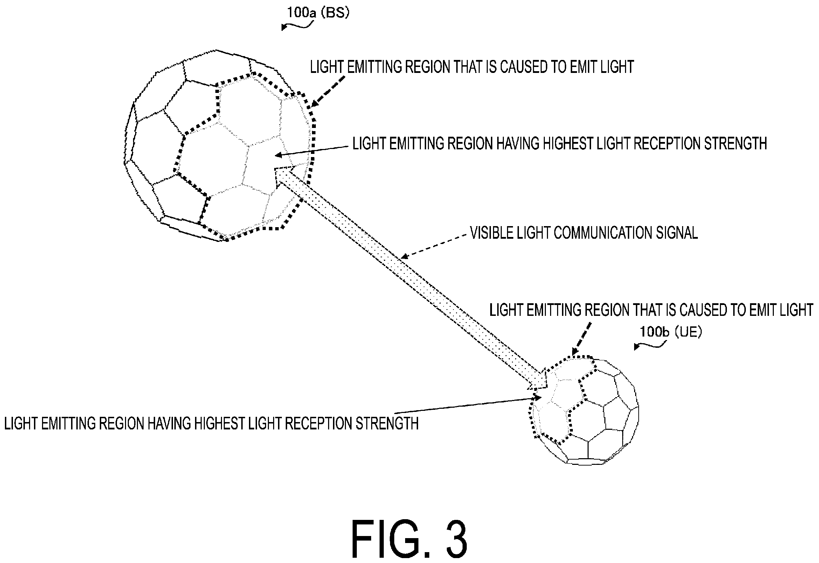

FIG. 3 is a diagram illustrating an operation example of the underwater communication apparatus 100 according to the first embodiment.

FIG. 3 illustrates an example where one underwater communication apparatus 100a operates as a Base Station (BS), and another underwater communication apparatus 100b operates as a terminal (UE: User Equipment). The underwater communication apparatus 100a performs underwater visible light communication with the underwater communication apparatus 100b.

In each underwater communication apparatus 100, when the light receiver 102 included in one light emitting region 10 of the plurality of light emitting regions 10 detects incident visible light having a strength equal to or greater than a predetermined strength, the controller 110 controls the light emitter 101 of the one light emitting region 10 to cause the one light emitting region 10 to emit light. Here, the incident visible light having a strength equal to or greater than the predetermined strength may be incident visible light whose light reception strength is equal to or greater than a threshold. The incident visible light having the strength equal to or greater than the predetermined strength may be incident visible light that has the highest light reception strength as incident visible light detected by each light receiver 102. For example, in each underwater communication apparatus 100, the controller 110 controls the light emitter 101 of one light emitting region 10 to cause the one light emitting region 10, in which the incident visible light having the highest light reception strength has been detected, to emit light.

As described above, the light emitting region 10 associated with the light receiver 102 is caused to emit light, the light receiver 102 having detected the incident visible light that has a strength equal to or greater than the predetermined strength, thus allowing the visible light (visible light communication signal) to be emitted toward the direction in which the destination apparatus of communication exists. A change in a relative positional relationship between the underwater communication apparatuses 100 changes can also be managed. Visible light (visible light communication signal) can be controlled not to be emitted in a direction in which the destination apparatus of communication does not exist, thus suppressing interference with other underwater visible light communications.

Here, the incident visible light detected by the light receiver 102, more specifically, the incident visible light referred to by the controller 110 to determine the light emitting region 10 caused to emit light is a visible light communication signal emitted from another underwater communication apparatus 100. In particular, the incident visible light referred to by the controller 110 to determine the light emitting region 10 caused to emit light may be a pilot signal among the visible light communication signals. The pilot signal may be a signal including a predetermined signal sequence. The pilot signal may be a visible light communication signal having a predetermined wavelength. As described above, the controller 110 determines the light emitting region 10 caused to emit light based on the visible light communication signal (the pilot signal in particular) incident on the light receiver 102. Thus, visible light (visible light communication signal) can be appropriately emitted toward the direction in which the destination apparatus of communication exists while, for example, the influence of sunlight or the like is eliminated.

In each underwater communication apparatus 100, the controller 110 may control the light emitter 101 of one light emitting region 10 and the light emitters 101 of adjacent light emitting regions 10 to cause, in addition to the one light emitting region 10, the adjacent light emitting regions 10 to emit light, the one light emitting region 10 having detected incident visible light having a strength equal to or greater than a predetermined strength and the adjacent light emitting regions 10 being adjacent to the one light emitting region 10. In such a control example, the one light emitting region 10 and the adjacent light emitting region 10 correspond to a light emitting region group including the light emitting regions 10 caused to emit light. In an example where the light emitting regions 10 form the dotriacontahedron, the number of the adjacent light emitting regions 10 is five. Only the six light emitting regions 10 in total among the 32 light emitting regions 10 are required to emit light. The light emitting regions 10 controlled by the controller 110 to emit light are not limited to the light emitting region 10 having detected incident visible light having a strength equal to or greater than a predetermined strength and the adjacent light emitting regions 10 to emit light, and the second adjacent light emitting regions 10 may be controlled by the controller 110 to emit light. Although current consumption and heat generation increase as the number of the light emitting regions 10 caused to emit light increases, this makes it easy to perform underwater visible light communication even if the relative positional relationship between the underwater communication apparatuses 100 varies.

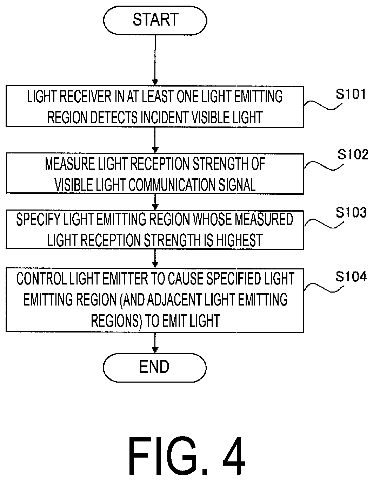

FIG. 4 is a diagram illustrating an operation flow example of the underwater communication apparatus 100 according to the first embodiment.

In step S101, the light receiver 102 of at least one light emitting region 10 detects a visible light communication signal (e.g., pilot signal).

In step S102, the controller 110 measures a light reception strength of the visible light communication signal detected in step S101. For example, the controller 110 measures as the light reception strength a signal level of an electrical signal converted from an optical signal by the light receiver 102.

In step S103, the controller 110 identifies the light emitting region 10 (light receiver 102) having the highest light reception strength measured in step S102.

In step S104, the controller 110 controls the light emitter 101 of the light emitting region 10 identified in step S103 to cause the light emitting region 10 to emit light. That is, the controller 110 controls the light emitter 101 of the light emitting region 10 identified in step S103 to cause this light emitting region 10 to emit (transmit) a visible light communication signal. The light emitter 101 emits (transmits) the visible light communication signal under control of the controller 110.

### [First Variation of First Embodiment]

The underwater communication apparatus 100 according to the first variation of the first embodiment will be described. In the present variation, the controller 110 changes the light emission strength of the light emitting region 10 caused to emit light, depending on the light reception strength of the visible light communication signal detected by the light receiver 102.

When the light emission strength of the pilot signal emitted from another underwater communication apparatus 100 is constant, as a distance between one underwater communication apparatus 100 and the other underwater communication apparatus 100 becomes shorter, the light reception strength of the visible light communication signal detected by the one underwater communication apparatus 100 (light receiver 102) becomes higher. As the distance between the one underwater communication apparatus 100 and the other underwater communication apparatus 100 becomes longer, the light reception strength of the visible light communication signal detected by the one underwater communication apparatus 100 (light receiver 102) becomes lower.

Here, since, when the distance between the one underwater communication apparatus 100 and the other underwater communication apparatus 100 is short, the light emission strength of the visible light communication signal emitted from the one underwater communication apparatus 100 (the light emitter 101) may be low, the controller 110 controls the light emitter 101 to reduce the light emission strength. This allows current consumption and heat generation to be reduced.

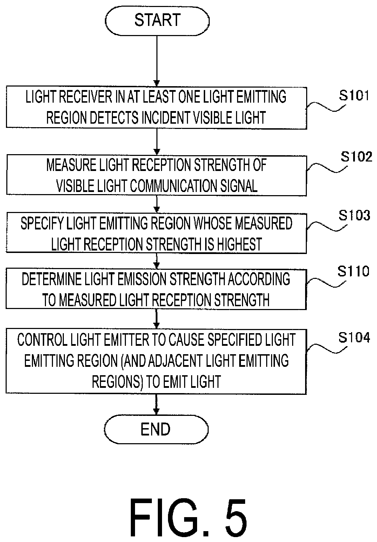

FIG. 5 is a diagram illustrating an operation example of the underwater communication apparatus 100 according to the first variation of the first embodiment.

As illustrated in FIG. 5, in step S101, the light receiver 102 of at least one light emitting region 10 detects a pilot signal emitted from the other underwater communication apparatus 100.

In step S102, the controller 110 measures the light reception strength of the pilot signal detected in step S101. For example, the controller 110 measures as the light reception strength a signal level of an electrical signal converted from an optical signal by the light receiver 102.

In step S103, the controller 110 identifies the light emitting region 10 (light receiver 102) having the highest light reception strength measured in step S102.

In step S110, the controller 110 determines the light emission strength of the light emitting region 10 caused to emit light, depending on the light reception strength measured at the light receiver 102 identified in step S103. For example, the controller 110 determines to increase the light emission strength of the light emitting region 10 caused to emit light as the light reception strength measured at the light receiver 102 identified in step S103 becomes lower.

In step S104, the controller 110 controls the light emitter 101 of the light emitting region 10 identified in step S103 to cause the light emitting region 10 to emit light at the light emission strength determined in step S110.

### [Second Variation of First Embodiment]

The underwater communication apparatus 100 according to the second variation of the first embodiment will be described. In the present variation, the controller 110 estimates a level of ambient darkness around the underwater communication apparatus 100 depending on a status of detection at the plurality of light receivers 102, and changes the light emission strength of the light emitting region 10 caused to emit light depending on the estimated level of ambient darkness.

Since, when the surroundings of the underwater communication apparatus 100 are dark, the light emission strength of the visible light communication signal emitted from the one underwater communication apparatus 100 (light emitter 101) may be low, the controller 110 controls the light emitter 101 to reduce the light emission strength. This allows current consumption and heat generation to be reduced.

Here, the controller 110 may estimate a level of ambient darkness from an average of the light reception strengths at all or part of the light receivers 102 of the underwater communication apparatus 100. The controller 110 may estimate a level of ambient darkness based on the light reception strength at the one light receiver 102. When estimating the level of ambient darkness, the controller 110 may measure the light reception strength of visible light other than the visible light communication signal instead of the light reception strength of the visible light communication signal.

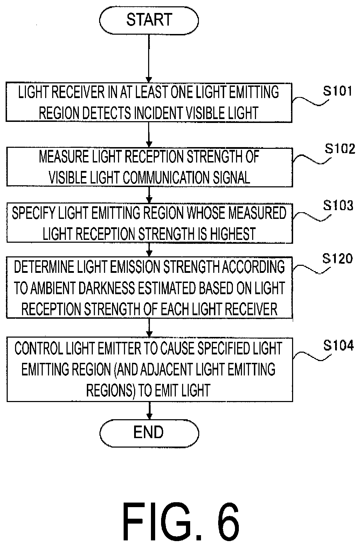

FIG. 6 is a diagram illustrating an operation example of the underwater communication apparatus 100 according to the second variation of the first embodiment.

As illustrated in FIG. 6, in step S101, the light receiver 102 of at least one light emitting region 10 detects a pilot signal emitted from another underwater communication apparatus 100.

In step S102, the controller 110 measures a light reception strength of the pilot signal detected in step S101. For example, the controller 110 measures as the light reception strength a signal level of an electrical signal converted from an optical signal by the light receiver 102.

In step S103, the controller 110 identifies the light emitting region 10 (light receiver 102) having the highest light reception strength measured in step S102.

In step S120, the controller 110 estimates a level of ambient darkness based on the light reception strengths of the incident visible light detected at all or part of the light receivers 102 of the underwater communication apparatus 100, more particularly, the incident visible light other than the visible light communication signal, and determines the light emission strength of the light emitting region 10 caused to emit light depending on the estimated level of ambient darkness. For example, the controller 110 determines to reduce the light emission strength of the light emitting region 10 caused to emit light as the level of ambient darkness estimated in step S103 is higher (i.e., the surroundings are darker).

In step S104, the controller 110 controls the light emitter 101 of the light emitting region 10 identified in step S103 to cause the light emitting region 10 to emit light at the light emission strength determined in step S110.

### Second Embodiment

The underwater communication apparatus 100 according to the second embodiment will be described mainly regarding differences from the first embodiment described above.

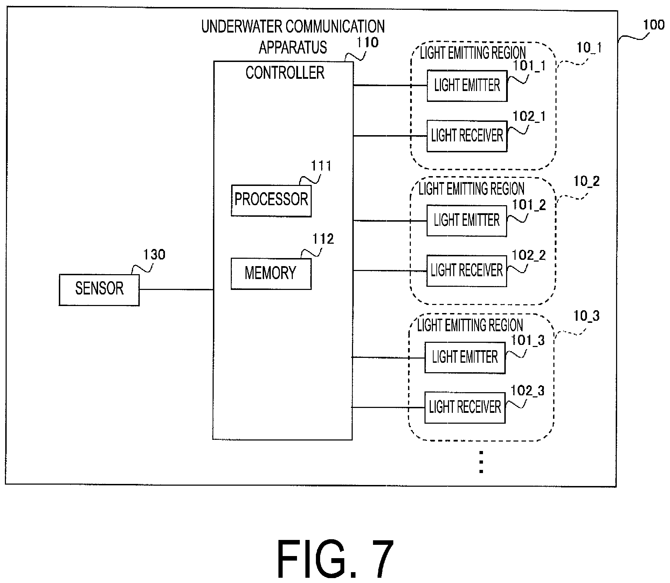

FIG. 7 is a diagram illustrating a configuration of the underwater communication apparatus 100 according to the second embodiment.

The underwater communication apparatus 100 according to the present embodiment further includes at least one sensor 130 for detecting a level of ambient turbidity around the underwater communication apparatus 100 and/or shake of the underwater communication apparatus 100. The sensor 130 may be a turbidity sensor for detecting a level of ambient turbidity. The sensor 130 may be an acceleration sensor or a gyro sensor for detecting shake of the underwater communication apparatus 100.

The controller 110 may change the number of the light emitting regions 10 caused to emit light (i.e., the size of the light emitting range) and/or the light emission strength of the light emitting regions 10 caused to emit light, depending on the detected level of ambient turbidity. For example, depending on detection of a high level of ambient turbidity (i.e., transparency is low), the controller 110 may increase the number of the light emitting regions 10 caused to emit light and/or increase the light emission strength of the light emitting regions 10 caused to emit light. Depending on detection of a low level of ambient turbidity (i.e., high transparency), the controller 110 may decrease the number of the light emitting regions 10 caused to emit light and/or reduce the light emission strength of the light emitting regions 10 caused to emit light.

The controller 110 may change the number of the light emitting regions 10 (i.e., the size of the light emitting range) caused to emit light depending on the detected shake. For example, depending on detection of shake (e.g., strong water current), the controller 110 may increase the number of the light emitting regions 10 caused to emit light (expand the light emitting range). Depending on detection of a low shake level (e.g., weak water current), the controller 110 may decrease the number of the light emitting regions 10 caused to emit light (reduce the light emitting range).

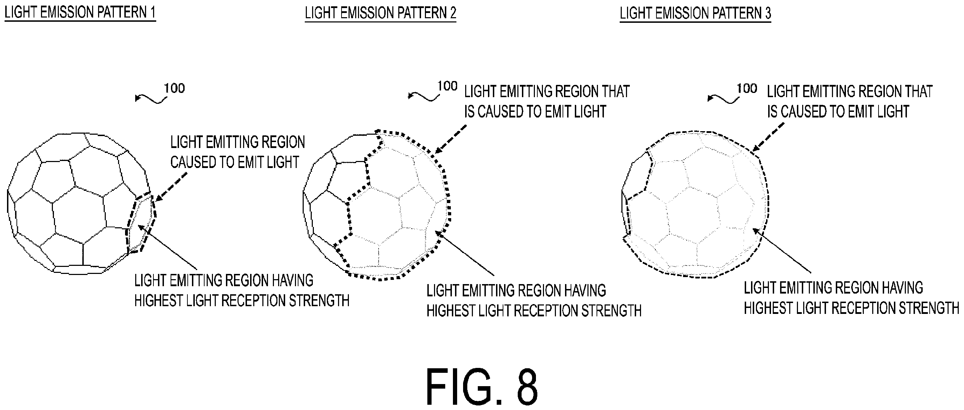

FIG. 8 is a diagram illustrating pattern examples of the light emitting regions 10 that are caused to emit light.

In a light emission pattern 1, the controller 110 causes only one light emitting region 10 having the highest light reception strength to emit light. In a light emission pattern 2, the controller 110 causes the light emitting regions 10 in a range from the one light emitting region 10 having the highest light reception strength to the second adjacent light emitting regions 10 of the one light emitting region 10 to emit light. In a light emission pattern 3, in addition to the light emission pattern 2, the controller 110 causes the light emitting regions 10 in a range up to the third adjacent light emitting regions 10 to emit light. As the number of the light emitting regions 10 caused to emit light increases, underwater visible light communication can be stabilized, but current consumption and heat generation increase.

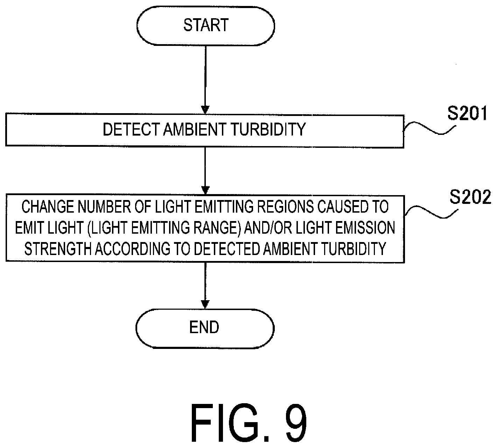

FIG. 9 is a diagram illustrating a first operation example of the underwater communication apparatus 100 according to the second embodiment.

In step S201, the controller 110 detects (measures) a level of ambient turbidity using the sensor 130.

In step S202, the controller 110 changes the number of light emitting regions (i.e., a range for light emission) caused to emit light and/or the light emission strength depending on the level of ambient turbidity detected in step S201.

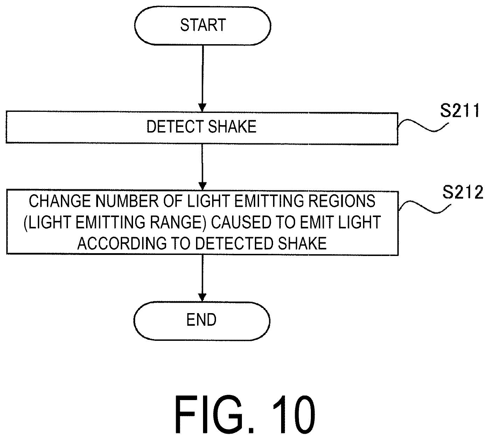

FIG. 10 is a diagram illustrating a second operation example of the underwater communication apparatus 100 according to the second embodiment.

In step S211, the controller 110 detects (measures) shake using the sensor 130.

In step S212, the controller 110 changes the number of light emitting regions (i.e., a range for light emission) caused to emit light depending on the shake detected in step S201.

### Third Embodiment

The underwater communication apparatus 100 according to the third embodiment will be described mainly regarding differences from the first and second embodiments described above.

In the third embodiment, the underwater communication apparatus 100 operates as a Base Station (BS) that performs underwater visible light communication with a terminal (UE). The controller 110 controls the plurality of light emitters 101 and the plurality of light receivers 102 of the underwater communication apparatus 100 to use, while using a first subset of the plurality of light emitting regions 10 of the underwater communication apparatus 100 for underwater communication with a first terminal (UE1), a second subset of the plurality of light emitting regions 10 for underwater communication with a second terminal (UE2). This allows the underwater communication apparatus 100 operating as the BS to perform underwater visible light communication with a plurality of UEs simultaneously.

As described above, the underwater communication apparatus 100 according to the third embodiment performs spatial multiplexing by transmitting a different signal per destination for transmission when the light emitting regions 10 do not overlap at a time of communication with a plurality of UEs. When an event of occurrence of interference between UEs is observed (e.g., a throughput is reduced), the controller 110 may cause some of transmissions not to be performed as appropriate.

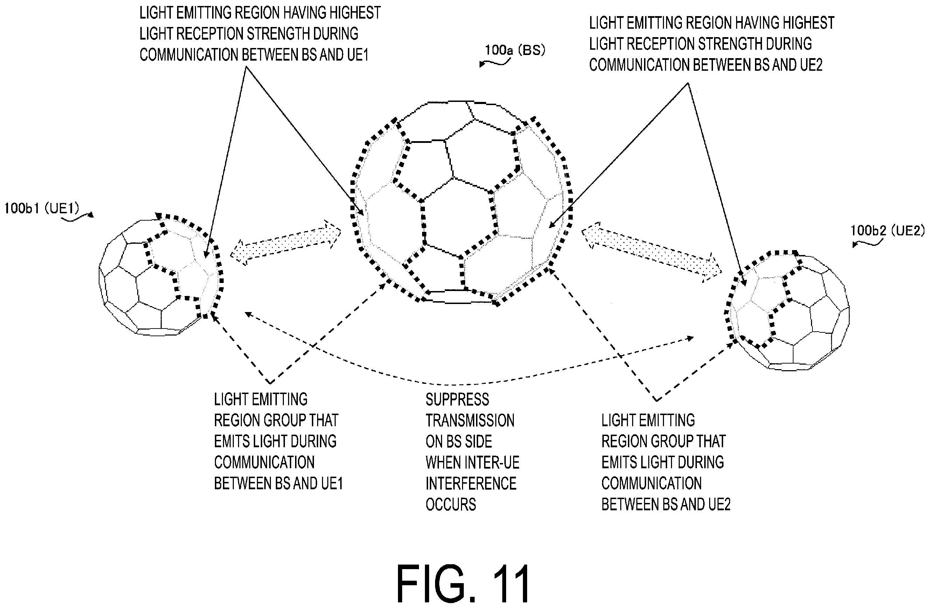

FIG. 11 is a diagram illustrating a communication operation example of the underwater communication apparatus 100 according to the third embodiment. Here, FIG. 11 illustrates the example where the underwater communication apparatus 100a operating as a BS performs spatial multiplexing communication with two underwater communication apparatuses 100b1 and 100b2 each operating as a UE. The underwater communication apparatus 100a may perform spatial multiplexing communication with three or more underwater communication apparatuses 100b each operating as a UE.

In the underwater communication apparatus 100a operating as the BS, the controller 110 controls the plurality of light emitters 101 and the plurality of light receivers 102 of the underwater communication apparatus 100 to use, while using a first subset of the plurality of light emitting regions 10 of the underwater communication apparatus 100a for underwater communication with the underwater communication apparatus 100b1 (UE1), a second subset of the plurality of light emitting regions 10 for underwater communication with the underwater communication apparatus 100b2 (UE2). In the example in FIG. 11, the controller 110 controls the light emitter 101 of one light emitting region 10 having the highest light reception strength from the underwater communication apparatus 100b1 (UE1) and the light emitters 101 of adjacent light emitting regions 10 adjacent to the one light emitting region 10 to cause, in addition to the one light emitting region 10, the adjacent light emitting regions 10 to emit light. The controller 110 controls the light emitter 101 of one light emitting region 10 having the highest light reception strength from the underwater communication apparatus 100b2 (UE2) and the light emitters 101 of adj acent light emitting regions 10 adjacent to the one light emitting region 10 to cause, in addition to the one light emitting region 10, the adjacent light emitting regions 10 to emit light.

In the underwater communication apparatus 100b1 operating as the UE1, the controller 110 controls the light emitter 101 of one light emitting region 10 having the highest light reception strength from the underwater communication apparatus 100a (BS) and the light emitters 101 of adjacent light emitting regions 10 adjacent to the one light emitting region 10 to cause, in addition to the one light emitting region 10, the adjacent light emitting regions 10 to emit light. In the underwater communication apparatus 100b2 operating as the UE2, the controller 110 controls the light emitter 101 of one light emitting region 10 having the highest light reception strength from the underwater communication apparatus 100a (BS) and the light emitters 101 of adjacent light emitting regions 10 adjacent to the one light emitting region 10 to cause, in addition to the one light emitting region 10, the adjacent light emitting regions 10 to emit light.

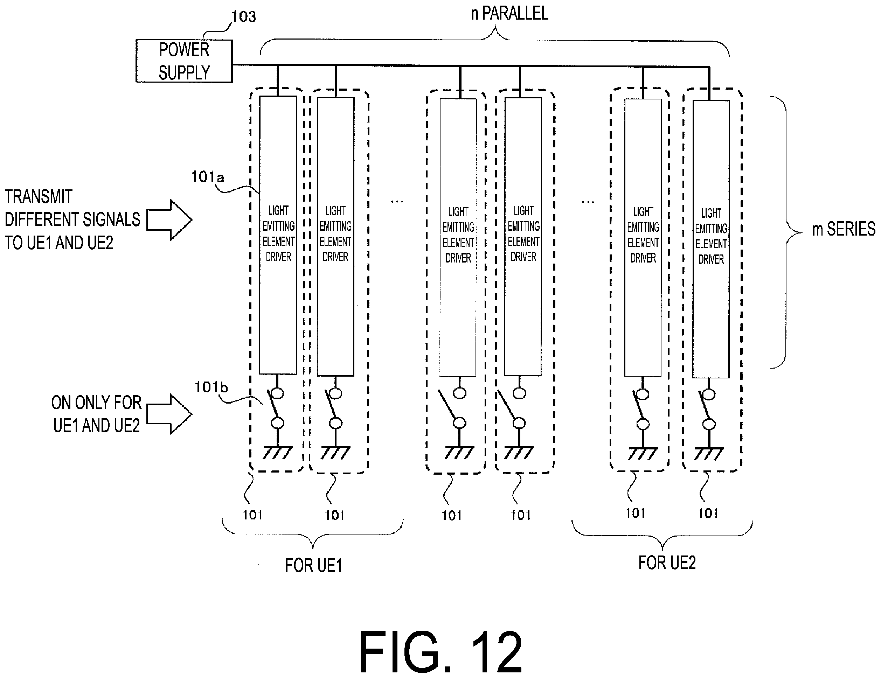

FIG. 12 is a diagram illustrating a configuration example of the plurality of light emitters 101 of the underwater communication apparatus 100 according to the third embodiment. Here, it is assumed that the total number of the light emitters 101 (light emitting regions 10) is n (n ≧ 2).

Each light emitter 101 includes the light emitting element driver 101a that is connected to the power supply 103 and drives the m (m ≧ 1) light emitting elements, and the switch 101b that performs switching between on and off of the light emitting element driver 101a. Each light emitting element driver 101a may include m (m ≧ 1) light emitting elements connected in series. The light emitting element may be a Light Emitting Diode (LED). The light emitting element may be a Laser Diode (LD). The n light emitting element drivers 101a are connected in parallel and one terminal of each light emitting element driver is connected to the power supply 103. As described above, when the number of the light emitting regions 10 is n (n ≧ 2), the plurality of light emitters 101 may include n circuits connected in parallel and m circuits connected in series.

Each light emitting element driver 101a and each switch 101b are controlled by the controller 110. More specifically, the controller 110 switches to an on state the switch 101b of the light emitter 101 included in the light emitting region 10 caused to emit light, and switches to an off state the switch 101b of the light emitter 101 included in the light emitting region 10 caused to not emit light. FIG. 12 illustrates an example where the controller 110 switches to an on state the switch 101b of at least one light emitter 101 used for underwater visible light communication with the UE1, switches to an on state the switch 101b of at least one light emitter 101 used for underwater visible light communication with the UE2, and switches to an off state the switches 101b of other light emitters 101. The controller 110 may apply a pulse corresponding to a transmission signal to the light emitting element driver 101a of the light emitter 101 the switch SW of which has been caused to be in an on state.

Here, the controller 110 may provide a signal (pulse) for the UE1 to the light emitting element driver 101a of the at least one light emitter 101 used for underwater visible light communication with the UE1. The controller 110 may provide a signal (pulse) for the UE2 to the light emitting element driver 101a of the at least one light emitter 101 used for underwater visible light communication with the UE2.

### Fourth Embodiment

The underwater communication apparatus 100 according to the fourth embodiment will be described mainly regarding differences from the first to third embodiments described above.

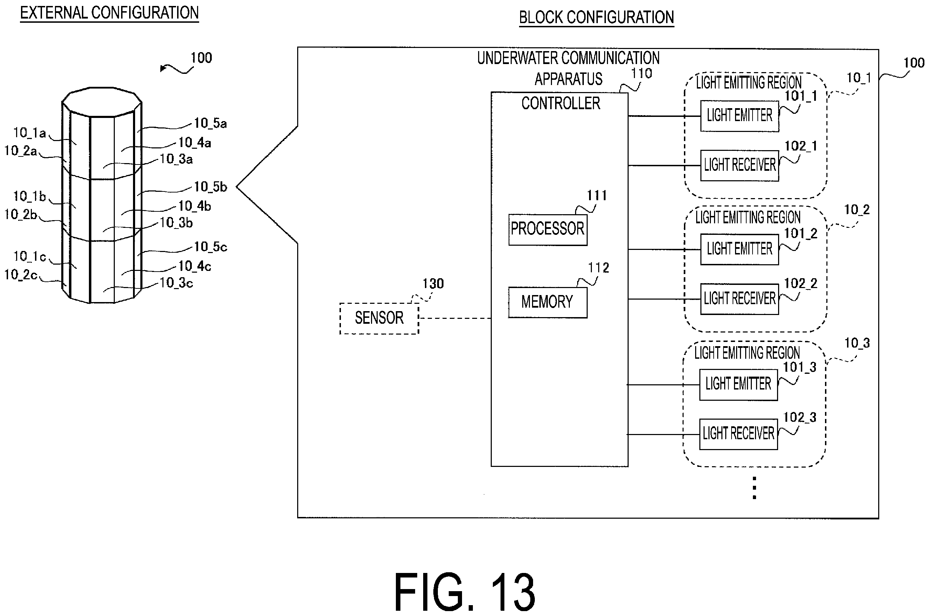

FIG. 13 is a diagram illustrating a configuration of the underwater communication apparatus 100 according to the fourth embodiment.

In the fourth embodiment, each of the plurality of light emitting regions 10 constitutes the side surface of a prism. FIG. 13 illustrates an example where this prism is a decagonal prism. The prism is not limited to the decagonal prism, and may be, for example, a k-sided prism (k ≧ 3). Such a decagonal prism includes light emitting regions 10_1a to 10_10a in an upper section, light emitting regions 10_1b to 10_10b in a middle section, and light emitting regions 10_1b to 10_10b in a lower section. Such a rod-like configuration makes it possible to obtain a wide communication range in the vertical direction. The control according to the first to third embodiments described above may be applied to the rod-like underwater communication apparatus 100.

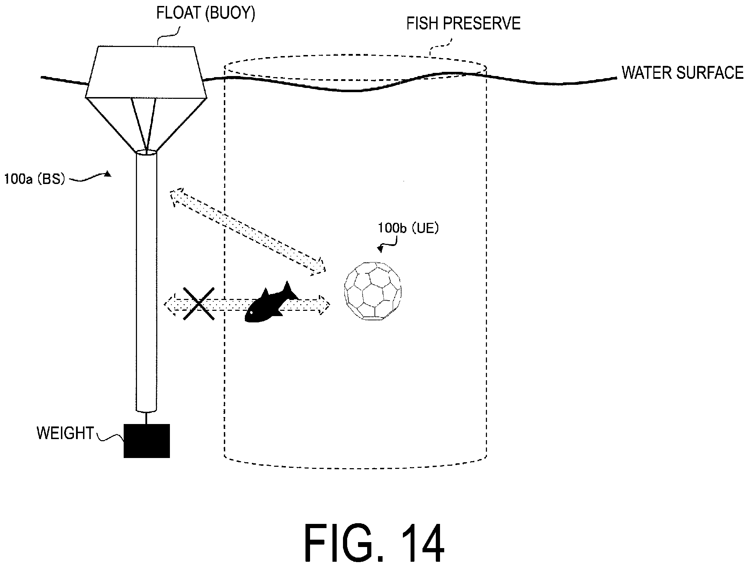

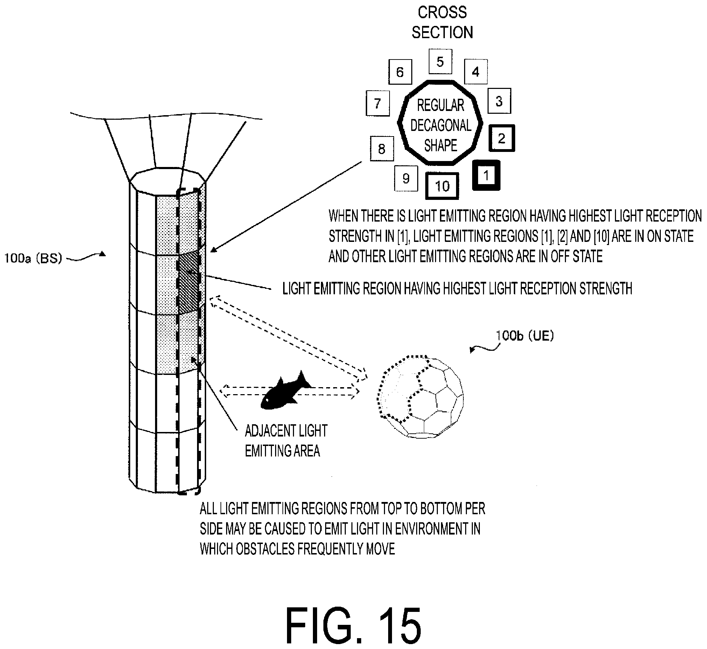

FIGs. 14 and 15 are diagrams illustrating application scenario examples of the underwater communication apparatus 100 according to the fourth embodiment.

As illustrated in FIG. 14, one underwater communication apparatus 100a operates as a base station (BS), and another underwater communication apparatus 100b operates as a terminal (UE). The underwater communication apparatus 100a performs underwater visible light communication with the underwater communication apparatus 100b. In the underwater communication apparatus 100a, a float (buoy) is attached on a side of the upper end, and a weight is attached on a side of the lower end. The underwater communication apparatus 100b is located inside a fish preserve. When a large number of obstacles (fish and fish preserve structures) are present, applying the rod-like underwater communication apparatus 100a allows communication with the underwater communication apparatus 100b to be performed in a wider range in the vertical direction.

As illustrated in FIG. 15, in the rod-like underwater communication apparatus 100a, when the light receiver 102 included in one light emitting region 10 of the plurality of light emitting regions 10 detects incident visible light having a strength equal to or greater than a predetermined strength, the controller 110 controls the light emitter 101 of the one light emitting region 10 to cause the one light emitting region 10 to emit light. For example, the controller 110 controls the light emitter 101 of the one light emitting region 10 having the highest light reception strength from the underwater communication apparatus 100b and the light emitter 101 of adjacent light emitting regions 10 adjacent to the one light emitting region to cause the one light emitting region 10 and the adjacent light emitting regions 10 to emit light. Here, FIG. 15 illustrates an example where the rod-like underwater communication apparatus 100a employs a five-section configuration. In an environment in which obstacles frequently move, the controller 110 of the underwater communication apparatus 100a may cause all of the light emitting regions 10 from the top to the bottom per side, that is, all of the light emitting regions 10 on the upper side and the lower side with respect to the light emitting region 10 having the highest light reception strength to emit light.

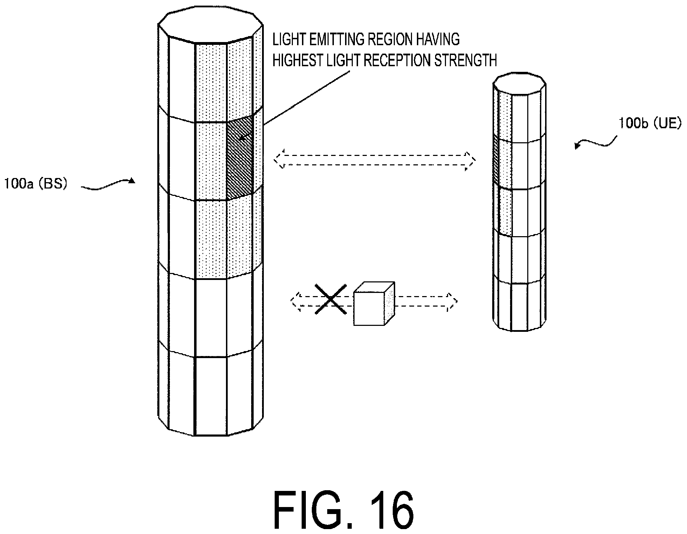

Although FIG. 15 illustrates the example where the underwater communication apparatus 100b operating as the UE has a spherical configuration, the underwater communication apparatus 100b may also have a rod-like configuration as illustrated in FIG. 16. In the rod-like underwater communication apparatus 100b, when the light receiver 102 included in one light emitting region 10 of the plurality of light emitting regions 10 detects incident visible light having a strength equal to or greater than a predetermined strength, the controller 110 controls the light emitter 101 of the one light emitting region 10 to cause the one light emitting region 10 to emit light. For example, the controller 110 controls the light emitter 101 of one light emitting region 10 having the highest light reception strength from the underwater communication apparatus 100a and the light emitters 101 of adjacent light emitting regions 10 adjacent to the one light emitting region to cause the one light emitting region 10 and the adjacent light emitting regions 10 to emit light. FIG. 16 illustrates an example where the rod-like underwater communication apparatus 100b employs a five-section configuration. Although FIG. 16 illustrates an obstacle as a cube, the controller 110 of the underwater communication apparatus 100b may cause all of the light emitting regions 10 from the top to the bottom per side, that is, all of the light emitting regions 10 on the upper side and the lower side with respect to the light emitting region 10 having the highest light reception strength to emit light in an environment in which obstacles frequently move.

### Fifth Embodiment

The underwater communication apparatus 100 according to the fifth embodiment will be described mainly regarding differences from the first to fourth embodiments described above.

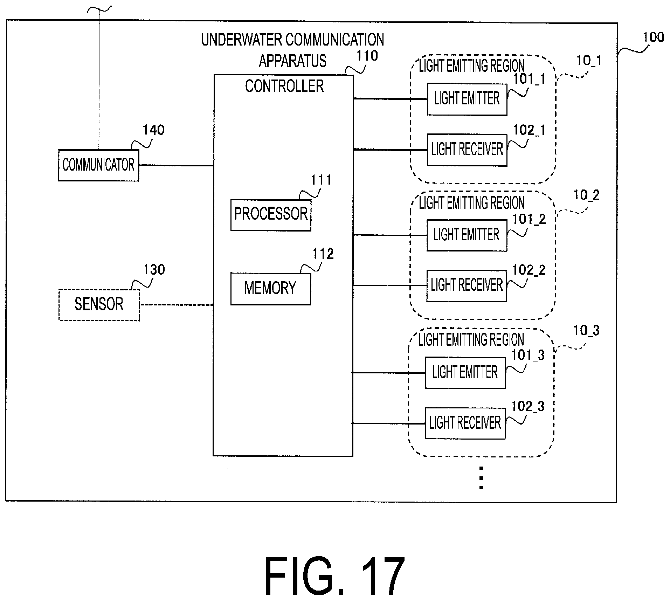

FIG. 17 is a diagram illustrating a configuration of the underwater communication apparatus 100 according to the fifth embodiment. In the fifth embodiment, the underwater communication apparatus 100 operates as a Base Station (BS) that performs underwater visible light communication with a UE.

The underwater communication apparatus 100 according to the fifth embodiment further includes a communicator 140 that performs communication with another base station different from one base station by a communication scheme other than underwater visible light communication. The communicator 140 is connected by wiring (cabling). The wiring (cabling) may connect the one base station and the other base station. The wiring (cabling) may connect to the one base station a wireless processor (including an antenna) located above a water surface. The communicator 140 may perform sonic communication with the other base station.

The controller 110 controls underwater visible light communication in the one base station based on communication performed by communicator 140 (i.e., communication with the other base station). For example, the controller 110 may perform control based on the communication with the other base station to cause a timing at which the one base station performs underwater visible light communication with the UE to be different from a timing at which the other base station emits light. Thus, the influence of interference between the base station and the other base station can be reduced.

The controller 110 may perform control based on the communication with the other base station to cause a light emission color used by the one base station for underwater visible light communication with a terminal to be different from a light emission color used by the other base station. When, for example, the other base station operates as a dummy light source for attracting fish, the controller 110 may perform control to cause the light emission color used by the one base station for underwater visible light communication with the terminal to be different from the light emission color (i.e., a specific color for attracting fish) used by the other base station.

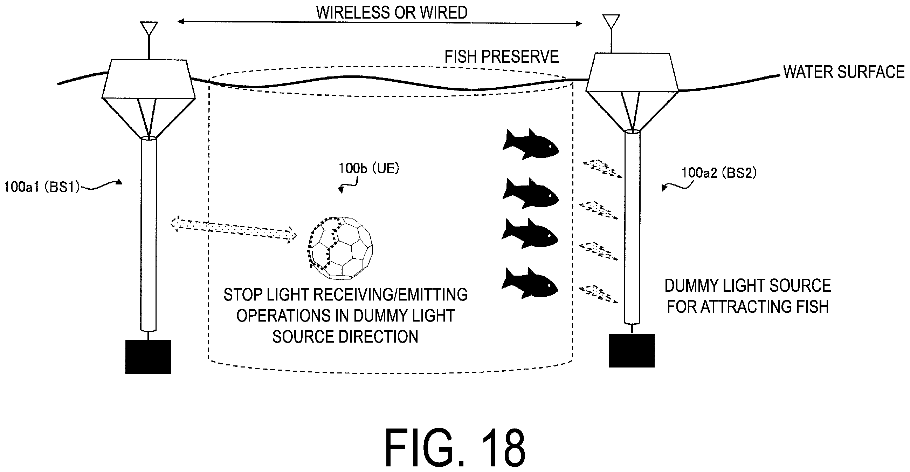

FIG. 18 is a diagram illustrating an application scenario example of the underwater communication apparatus 100 according to the fifth embodiment.

Two or more BSs are installed, and some of the two or more BSs that are not performing communication are used as dummy light sources for attracting fish. FIG. 18 illustrates an example where an underwater communication apparatus 100a1 operating as a BS1 and an underwater communication apparatus 100a2 operating as a BS2 are installed. Each underwater communication apparatus 100 switches the BS to be the dummy light source each time depending on the communication status. The underwater communication apparatuses 100 cooperates with each other through inter-BS communication to adjust the light emission timing of the dummy light source with respective BSs with which the underwater communication apparatuses 100 are communicating. The underwater communication apparatus 100 cooperates with each other through inter-B S communication to cause the light emission color of the dummy light source to be different from the colors of the BSs with which the underwater communication apparatuses 100 are communicating, thus suppressing crosstalk.

The underwater communication apparatus 100b operating as the UE may stop the light receiving/emitting operation in a dummy light source direction. When, for example, at least one light receiver 102 detects a specific color (wavelength) from the dummy light source, the controller 110 of the underwater communication apparatus 100b may perform control to cause each light emitting region 10 associated with the light receiver 102 not to emit light.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. The order of steps in each operation flow described above is exemplary, and the order of the steps may be changed as appropriate.

A program may be provided that causes a computer to execute each processing performed by the underwater communication apparatus 100. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing each processing performed by the underwater communication apparatus 100 may be integrated, and at least part of the underwater communication apparatus 100 may be configured as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2021-214099 (filed on December 28, 2021), the contents of which are incorporated herein by reference in their entirety.

### REFERENCE SIGNS

10: Light emitting region
100: Underwater communication apparatus
101: Light emitter
101a: Light emitting element driver
101b: Switch
102: Light receiver
103: Power supply
110: Controller
111: Processor
112: Memory
130: Sensor
140: Communicator

## Claims

1. An underwater communication apparatus for performing underwater optical communication, the underwater communication apparatus comprising:
a plurality of light emitting regions configured to emit light in respective different directions and comprising respective light emitters;
a plurality of light receivers configured to detect light incident on each of the plurality of light emitting regions; and
a controller configured to control the respective light emitters to selectively cause part of the plurality of light emitting regions to emit light, depending on a status of the detection of incident light at the plurality of light receivers.

2. The underwater communication apparatus according to claim 1, wherein each of the plurality of light emitting regions constitutes a face of a polyhedron.

3. The underwater communication apparatus according to claim 1, wherein each of the plurality of light emitting regions constitutes a side surface of a prism.

4. The underwater communication apparatus according to any one of claims 1 to 3, wherein
each of the respective light emitters in the plurality of light emitting regions comprises
a light emitting element driver configured to drive m (m ≥ 1) light emitting elements, and
a switch configured to perform switching between on and off of the light emitting element driver, and
the controller is configured to switch to an on state the switch in the light emitter comprised in a light emitting region, caused to emit light, of the plurality of light emitting regions, and switch to an off state the switch in the light emitter comprised in a light emitting region, caused to not emit light, of the plurality of light emitting regions.

5. The underwater communication apparatus according to any one of claims 1 to 3, wherein when the light receiver comprised in one light emitting region of the plurality of light emitting regions detects incident light having a strength equal to or greater than a predetermined strength, the controller is configured to control the light emitter of the one light emitting region to cause the one light emitting region to emit light.

6. The underwater communication apparatus according to claim 5, wherein the controller is configured to control each of the light emitter of the one light emitting region and the light emitter of an adjacent light emitting region adjacent to the one light emitting region to cause, in addition to the one light emitting region, the adjacent light emitting region to emit light.

7. The underwater communication apparatus according to claim 5, wherein the incident light is an optical communication signal emitted from another underwater communication apparatus.

8. The underwater communication apparatus according to claim 7, wherein the controller is configured to change a light emission strength of the light emitting region caused to emit light, depending on a light reception strength, detected by the light receiver, of the optical communication signal.

9. The underwater communication apparatus according to any one of claims 1 to 3, wherein the controller is configured to estimate a level of ambient darkness of the underwater communication apparatus depending on the status of the detection at the plurality of light receivers, and change a light emission strength of a light emitting region of the plurality of light emitting regions caused to emit light, depending on the estimated level of ambient darkness.

10. The underwater communication apparatus according to any one of claims 1 to 3, further comprising a sensor configured to detect a level of ambient turbidity around the underwater communication apparatus,
wherein the controller is configured to change the number of light emitting regions of the plurality of light emitting regions caused to emit light and/or a light emission strength, depending on the detected level of ambient turbidity.

11. The underwater communication apparatus according to any one of claims 1 to 3, further comprising a sensor configured to detect shake of the underwater communication apparatus,
wherein the controller is configured to change the number of light emitting regions of the plurality of light emitting regions caused to emit light, depending on the detected movement.

12. The underwater communication apparatus according to any one of claims 1 to 3, wherein
the underwater communication apparatus is a base station configured to perform underwater optical communication with a terminal, and
the controller is configured to control the plurality of light emitters and the plurality of light receivers to use, while using a first subset of the plurality of light emitting regions for underwater communication with a first terminal, a second subset of the plurality of light emitting regions for underwater communication with a second terminal.

13. The underwater communication apparatus according to any one of claims 1 to 3, wherein
the underwater communication apparatus
is a base station configured to perform underwater optical communication with a terminal, and
further comprises a communicator configured to perform communication with another base station different from the base station by a communication scheme other than the underwater optical communication, and
the controller is configured to control the underwater optical communication at the base station based on the communication with the other base station.

14. The underwater communication apparatus according to claim 13, wherein the controller is configured to perform control, based on the communication with the other base station, to cause a timing at which the base station performs underwater optical communication with the terminal to be different from a timing at which the other base station emits light.

15. The underwater communication apparatus according to claim 13, wherein the controller is configured to perform control, based on the communication with the other base station, to cause a light emission color used by the base station for the underwater optical communication with the terminal to be different from a light emission color used by the other base station.

16. An underwater communication method used in an underwater communication apparatus for performing underwater optical communication, the underwater communication method comprising:
detecting, at a plurality of light receivers, light incident on each of a plurality of light emitting regions configured to emit light in respective different directions and comprising respective light emitters; and
controlling the respective light emitters to selectively cause part of the plurality of light emitting regions to emit light, depending on a status of the detection of incident light at the plurality of light receivers.

17. A program causing an underwater communication apparatus for performing underwater optical communication to execute:
processing of detecting, at a plurality of light receivers, light incident on each of a plurality of light emitting regions configured to emit light in respective different directions and comprising respective light emitters; and
processing of controlling the respective light emitters to selectively cause part of the plurality of light emitting regions to emit light, depending on a status of the detection of incident light at the plurality of light receivers.
